# EUROPÄISCHE PATENTSCHRIFT

(11) **EP 2 268 134 B1**
(45) Veröffentlichungstag und Bekanntmachung des Hinweises auf die Patenterteilung: **20.06.2012**
(21) Anmeldenummer: 09731945.3
(22) Anmeldetag: 20.04.2009
(51) Int. Cl.: B01D 39/08

(54) **FILTERNETZWERK**
FILTER NETWORK
RÉSEAU DE FILTRES

(30) Priorität: 18.04.2008 DE 102008019611; 05.12.2008 DE 102008060723
(43) Veröffentlichungstag der Anmeldung: 05.01.2011
(73) Patentinhaber: IFE Innovative Forschungs- und Entwicklungs GmbH & Co. KG, 24955 Harrislee (DE)
(72) Erfinder: WILLUWEIT, Thomas, 95030 Hof (DE)
(74) Vertreter: Isarpatent
(86) Internationale Anmeldenummer: PCT/EP2009/002867
(87) Internationale Veröffentlichungsnummer: WO 2009/127436

(56) Entgegenhaltungen:
- EP-A- 0 391 041
- WO-A-03/024565
- AT-B- 149 999
- FR-A- 2 769 517
- GB-A- 1 372 561

## Beschreibung

Die vorliegende Erfindung betrifft eine Filtereinheit zur Reinigung von Fluiden gemäß Patentanspruch 1, aus mehreren solchen Filtereinheiten zusammengesetzte Filtersysteme gemäß den Patentansprüchen 18 und 19 sowie die Verwendung der Filtereinheit oder der Filtersysteme. zum Abfiltrieren von Schlamm und Schwebealgen aus Wasser oder zur Reinigung von Gasen gemäß den Patentansprüchen 23 und 25.

Schöne Teiche mit klarem Wasser sind das Ziel aller Teichbesitzer. Die Pflege von Teichen, besonders wenn sie mit Fischen besetzt sind, ist aber mit typischen Problemen behaftet. Schwankende Sauerstoffversorgung, verursacht durch hohe Fischbesatzdichten und/oder massenhaft verrottende abgestorbene Algen, führen zu massiven Problemen bei den Lebewesen im Wasser. Lebende Algen sind für einen funktionierenden Gartenteich zwar unerlässlich, denn sie produzieren Sauerstoff und sind in der Nahrungskette das unterste Glied, jedoch führt ein ungebremstes Algenwachstum zu einer Erniedrigung der sog. Carbonathärte und zu pH-Wert-Schwankungen des Wassers wodurch die Artenvielfalt reduziert wird und einzelne Algenarten massenhaft auftreten können. Die Fraßfeinde der Algen - die Kleinkrebschen - werden durch die pH-Wert - Schwankungen ebenfalls beeinträchtigt. Das sind die wichtigsten Gründe, warum Gartenteiche nicht ordentlich funktionieren. Hinzu kommt, das Gartenteiche schnell verschlammen.

Zur Algenbekämpfung werden im Stand der Technik neben chemischen Mitteln wie Algiziden auch physikalische Mittel wie Filter eingesetzt. Aus ökologischen Gründen tendieren viele Teichbesitzer zum Filtereinsatz. Die Vorteile von Filtern sind die ökologische Unbedenklichkeit und die geringen Betriebskosten. Nachteile dagegen sind, dass nicht alle Algen abfiltrierbar sind, und dass die Filter leicht verstopfen, wozu insbesondere auch der in Teichen vorhandene Schlamm beiträgt. Dadurch sinkt die Filtriergeschwindigkeit und es sind häufige Reinigungen erforderlich.

Einige dieser Probleme werden zum Beispiel durch das in der WO 03/024565 beschriebene Teichfiltersystem behoben. Der eingesetzte

Filterblock setzt sich pyramidenförmig aus mehreren Lagen Filtermaterial zusammen. Jede Lage Filtermaterial besteht wiederum aus mehreren miteinander verklebten oder verschweißten Filterschaumelementen mit achteckigem Querschnitt und entsprechenden Zu- und Abläufen. Wirtschaftlich problematisch sind hier der durch die spezielle pyramidenförmige Geometrie des Filterblocks und der diesen bildenden Lagen aus achteckigen Filterschaumelementen bedingte Verschnitt an Standardmatten aus Filterschaum, der 50 % und mehr betragen kann, sowie die nicht ohne weiteres maschinell mögliche Verbindung der achteckigen Filterschaumelemente zu einer Lage des Filterblocks.

Aufgabe der Erfindung ist die Vermeidung der oben erörterten Probleme des Standes der Technik.

Erfindungsgemäß wird diese Aufgabe durch eine Filtereinheit zur Reinigung von Fluiden gemäß Patentanspruch 1 und/oder aus mehreren solcher Filtereinheiten zusammengesetzte Filtersysteme gemäß den Patentansprüchen 18 und 19 gelöst. Die Erfindung betrifft ferner die Verwendung der benspruchten Filtereinheit oder der beanspruchten Filtersysteme zum Abfiltrieren von Schlamm und Schwebealgen aus Wasser oder zur Reinigung von Gasen gemäß den Patentansprüchen 23 und 25.

Vorteilhafte und/oder bevorzugte Ausführungsformen der Erfindung sind Gegenstand der Unteransprüche.

Die vorliegende Erfindung soll nun ohne Beschränkung und lediglich zur Veranschaulichung detaillierter erläutert werden.

Es ist klar, dass die Erfindung nicht nur auf Teiche, sondern allgemein auf Wässer angewendet werden kann. Unter Wässer im Sinne dieser Erfindung werden daher sowohl Süss- als auch Seewasseranlagen, natürliche Gewässer, Fischaufzuchtstationen einschließlich deren Bruthäuser, Aquarien, fischereitechnische Kreislaufanlagen usw. verstanden.

Die Erfindung betrifft eine Filtereinheit zur Reinigung von Fluiden, d.h. Gasen oder Flüssigkeiten, wie Luft oder Wasser, die gekennzeichnet ist durch eine Vielzahl von so miteinander verbundenen Längs- und Querelementen 1,5 aus mindestens einem für die Fluide durchlässigen Filtermaterial, dass ein Netzwerk mit einer Vielzahl von Maschen 20 ausgebildet wird, durch welche die Fluide in die Filtereinheit eintreten und in Kontakt mit dem das Netzwerk bildenden Filtermaterial kommen können, sowie ferner durch eine Vielzahl von sich durch die von den Längs- und Querelementen 1,5 des Netzwerks gebildeten Knotenpunkten erstreckenden Durchbrüchen oder Hohlkanälen 10, z.B. Bohrungen oder Stanzungen beliebiger Form, etwa dreiecksförmig, quadratisch, sechs- oder achteckig, durch welche die gereinigten Fluide aus der Filtereinheit austreten können. Die Durchbrüche 10 können sich entlang sämtlicher drei Raumachsen durch die Knotenpunkte des Netzwerks erstrecken, so dass sich in dem eigentlichen Filtermaterialnetzwerk ein inneres dreidimensionales Netzwerk von miteinander in Fluidkommunikation stehenden Kanälen ergibt. Vorzugsweise erstrecken die Durchbrüche sich aber nur entlang der Fließrichtung des Fluids durch die Knotenpunkte des Netzwerks.

Die Größe der Durchbrüche, z.B. im Falle einer Bohrung deren Durchmesser, unterliegt keinen besonderen Beschränkungen. Es sollte lediglich noch genügend umgebendes Filtermaterial übrigbleiben, dass die Stabilität des Netzwerkes nicht beeinträchtigt wird und kein ungereinigtes Fluid, z.B. Schmutzwasser, in die Durchbrüche eindringen kann. Geeignete Abmessungen lassen sich durch wenige einfache Routineversuche ermitteln. Im Falle von Filterschaum sollte beispielsweise die Dicke des den Durchbruch umgebenden Filtermaterials etwa 3 bis 4 cm oder auch mehr betragen.

Das Filtermaterial kann je nach Einsatzzweck beispielsweise luftdurchlässig, wasserdurchlässig oder luft- und wasserdurchlässig sein. Das Filtermaterial unterliegt keinen besonderen Beschränkungen solange es seinen Zweck erfüllt. Filtermaterialien geeigneter Struktur und/oder geeigneter Porengröße sind im Handel erhältlich. Es ist klar, dass das verwendete Filtermaterial gegen das Fluid ausreichend stabil sein sollte, zum Reinigen von Wasser also hydrolysestabil. Selbstverständlich können mehrere Filtermaterialien miteinander kombiniert werden.

Das Netzwerk aus Filtermaterial wird aus Längs- und Querelementen 1,5 gebildet. Länge, Breite und Tiefe der Elemente unterliegen keinen besonderen Beschränkungen und sind leicht an den Einsatzzweck oder an ein vorhandene Filtergehäuse anzupassen. Auch die Querschnitt kann beliebig sein, etwa kreisrund, oval, quadratisch, rechteckig, sechs-oder achteckig. Quadratische oder rechteckige Querschnitte sind besonders gut geeignet.

Die Längs- und Querelemente 1,5 des Filtermaterials können je nach dem gewählten Material flexibel oder starr sein. Sind die Längs- und Querelemente 1,5 flexibel, werden sie vorzugsweise miteinander verflochten. Sind sie dagegen starr, werden sie vorzugsweise einfach aufeinander gestapelt. Es ist aber klar, dass auch die flexiblen Längs- und Querelemente 1,5 gestapelt werden könnten. Der Abstand zwischen den einzelnen Längs- und Querelementen 1,5 unterliegt keinen besonderen Beschränkungen. Die Abstände können gleich oder unterschiedlich sein. Durch Wahl geeigneter Abstände lassen sich die Filtriergeschwindigkeit und die Filtrierleistung steuern.

Es ist klar, dass anstatt Längs- und Querelemente 1,5 aufeinander zu stapeln und miteinander zu verbinden, die gleiche Funktion auch durch einen massiven Block aus Filtermaterial mit geeigneten Abmessungen erfüllt werden kann, durch den sich eine Vielzahl vertikaler und horizontaler Durchbrüche erstrecken, so dass ein dreidimensionales Netzwerk bzw. Gitter entsteht. Durch die Knotenpunkte dieses Gitters erstrecken sich dann wieder in Fließrichtung der zu reinigenden Fluide die Durchbrüche, durch welche die gereinigten Fluide aus der Filtereinheit austreten können.

Geeignete flexible Filtermaterialien sind beispielsweise Gespinste natürlicher und künstlicher Stoffe wie Matten, Streifen oder Fäden aus beispielsweise Kokosfaser, Kork, Sisal, Hanf, Stroh, Gewebe wie Seide, Baumwolle, Stoff, Papier, Polymere, Kunststoffe, Schaumstoffe, Metallfäden, Eisenwolle, Grafit, Glaswolle, die optional hydrophilisiert oder hydrophobisiert sein können. Die Hydrophilisierung kann in Abhängigkeit von der Applikation beispielsweise durch Behandlung mit Lösungen von Stärke, Cellulose oder Salzen erfolgen. Die Hydrophobisierung kann in Abhängigkeit von der Applikation beispielsweise durch Behandlung mit Silanen, Wachsen oder Kohlenwasserstoffen erfolgen. Hydrophobisierte Glaswolle hat den weiteren Vorteil einer extrem guten Ölbindungsfähigkeit.

Geeignete starre Filtermaterialien sind beispielsweise Formstreifen aus natürlichen oder künstlichen Materialien wie poröser Keramik, Glassintermaterialien oder Sinterkunststoffen.

Es ist klar, dass die das Netzwerk bildenden Längs- und Querelemente 1,5 nicht aus dem Filtermaterial bestehen müssen. Geeignet sind beispielsweise auch längliche Beutel oder Schläuche geeigneter Abmessungen, die für das Fluid durchlässig, z.B. wasserdurchlässig, sind und ein Filtermaterial in zerkleinerten Form enthalten. Diese Ausführungsform hat den Vorteil, dass neben dem Filtermaterial auch noch Hilfsstoffe enthalten sein können, beispielsweise Bindemittel wie Ionenaustauscher (Kationen und Anionen), Aktivkohle, Phosphatbinder (z.B. Calciumperoxid, Eisen(II)- und Eisen(III)oxide und -hydroxide (auch gemischt), Hydroxide und Carbonate der Nebengruppenelemente, insbesondere Lanthansalze), chemische Katalysatoren zur Verbesserung der Reinigungsleistung oder Nährstoffdepots (Kohlenstoff-, Phosphor-, Stickstoffquellen) oder Kombinationen daraus. Es ist auch möglich, Längs- und Querelemente aus Filtermaterial mit geeigneten Hilfsstoffen zu imprägnieren.

Natürlich können die beschriebenen flexiblen und starren Längs- und Querelemente 1,5 auch miteinander und mit den im vorherigen Absatz beschriebenen länglichen Beuteln oder Schläuchen, die zerkleinertes Filtermaterial und gegebenenfalls Hilfsstoffe enthalten, kombiniert werden.

Ein besonders gut geeignetes Filtermaterial sind Filterschäume, die beispielsweise zum Reinigen von Wasser hydrolysestabil und offenporiger sind und eine Porosität im Bereich von ppi 10 bis ppi 100 haben. PPI bedeutet "pores per inch", d. h. Poren pro Zoll. Geeignete Filterschäume sind im Handel erhältlich und beispielsweise solche, die auf einem Polyurethan-, Polyethylen-, Polypropylen-, Polyether- oder Polyesterschaum basieren. Vorzugsweise sind bei dieser Ausführungsform die Längs- und Querelemente 1,5 aus dem Filterschaum wellenartig geformt und werden so miteinander zu dem Netzwerk verflochten, dass die Wellentäler der Längselemente 1 in die Wellenberge der Querelemente 5 eingreifen und umgekehrt. Vorzugsweise haben die Wellen die Form eines gleichschenkligen Trapezes.

Selbstverständlich können zwei oder mehr der erfindungsgemäßen Filtereinheiten zu einem Filtersystem mit mehreren Lagen aus Filtereinheiten kombiniert werden, und zwar so, dass die sich durch die von den Längs- und Querelementen 1,5 des Netzwerks gebildeten Knotenpunkte erstreckenden Durchbrüche 10 in Fluidkommunikation miteinander stehen. Dadurch verlängert sich der Filtrierweg und die Filtrierleistung erhöht sich. Es ist klar, dass die einzelnen Lagen aus Filtereinheiten ggf. geeignet gegeneinander abgedichtet sind, so dass kein Fluid dazwischen hindurchsickern kann und sich kein noch verschmutztes Fluid wieder mit bereits gereinigtem Fluid vermischt.

In weiterer Ausgestaltung des erfindungsgemäßen Filtersystems können mindestens zwei erfindungsgemäße Filtereinheiten so miteinander kombiniert werden, dass die sich durch die Knotenpunkte des Filtermaterialnetzwerks der ersten Filtereinheit erstreckenden Durchbrüche 10 in Fluidkommunikation mit den Maschen 20 des Filtermaterialnetzwerks der mindestens zweiten Filtereinheit stehen, so dass die aus den Knotendurchbrüchen 10 der ersten Filtereinheit austretenden gereinigten Fluide mit dem Filtermaterial der mindestens zweiten Filtereinheit in Kontakt kommen und durch die Knotendurchbrüche 10 von deren Filtermaterialnetzwerk weiter gereinigt aus dieser austreten können. Dies kann erfolgen, indem beispielsweise zwei oder auch mehrere erfindungsgemäße Filtereinheiten entsprechend so parallel zueinander verschoben bzw. versetzt miteinander kombiniert werden, dass abwechselnd Knotendurchbrüche 10 und Maschen 20 übereinander zu liegen kommen. Das entstehende Filtersystem hat dann die räumliche Form eines Parallelepipeds. Alternativ kann eine würfel- oder quaderförmige Form des erfindungsgemäßen Filtersystems erreicht werden, indem zwei verschiedene Typen von Filtereinheiten mit entsprechend versetzten Knotendurchbrüchen 10 und Maschen 20 alternierend miteinander kombiniert werden. Diese Ausführungsform hat den Vorteil, dass handelsübliche Filtergehäuse verwendet werden können, deren Filteraufnahmeraum z.B. würfel- oder quaderförmig ist. Es ist klar, dass die einzelnen Lagen aus Filtereinheiten ggf. gegeneinander abgedichtet sind, so dass kein Fluid dazwischen hindurchsickern kann und sich kein noch verschmutztes Fluid wieder mit bereits gereinigtem Fluid vermischt. Vorteilhafterweise kann die Porosität der Filtermaterialien der mindestens zwei Filtereinheiten in Fließrichtung der Fluide zunehmen, d.h. das Filtermaterial wird in Fliessrichtung feiner und kann kleinere Teilchen abfiltern. Dadurch ergibt sich eine weitere Verbesserung der Filtrierleistung.

Bei einer weiteren Ausführungsform des erfindungsgemäßen Filtersystems befindet sich zwischen jeweils zwei benachbarten Filtereinheiten sandwichartig eine Umlenkeinheit 50, die ein unteres und ein oberes Flächenelement 25,40 aus einem für die Fluide undurchlässigen Material, beispielsweise eine Folie oder Platte aus Kunststoff oder Metall, mit einem dadurch definierten Zwischenraum aufweist, wobei das untere und das obere Flächenelement 25,40 siebartig mit einer Vielzahl von Durchbrüchen 30,45 versehen sind, die so angeordnet sind, dass die Durchbrüche des unteren Flächenelements 30 in Fluidkommunikation mit den Knotendurchbrüchen 10 des Filternetzwerkmaterials der ersten Filtereinheit stehen und die Durchbrüche des oberen Flächenelements 45 in Fluidkommunikation mit den Maschen 20 des Filternetzwerkmaterials der mindestens zweiten Filtereinheit stehen, so dass die aus den Knotendurchbrüchen 10 der ersten Filtereinheit austretenden gereinigten Fluide über den Zwischenraum der Umlenkeinheit 50 in die mindestens zweite Filtereinheit eintreten und mit deren Filtermaterial in Kontakt kommen und durch die Knotendurchbrüche 10 von deren Filtermaterialnetzwerk weiter gereinigt aus dieser austreten können. Der Zwischenraum zwischen dem unteren und oberen Flächenelement kann durch Abstandshalter definiert werden, die sich kastenförmig entlang der Ränder der Flächenelemente erstrecken. Handelt es sich bei dem unteren und oberen Flächenelement 25,40 z.B. um eine Folie, können zur Erhöhung der mechanischen Stabilität weitere Stützelemente auf der Fläche vorgesehen werden. Diese können eine beliebige Form haben, z.B. quader- oder zylinderförmig oder auch flächig, und beliebig zueinander angeordnet sein. Vorteilhafterweise kann sich bei einer weiteren Ausführungsfom der Erfindung in dem von dem unteren und dem oberen Flächenelement 25,40 der Umlenkeinheit 50 definierten Zwischenraum ein sog. Abstandsgewirk (Fachbegriff aus der Textiltechnik) mit in Fließrichtung der Fluide verlaufenden sog. Pullfäden (Abstandsfäden) oder ein grobes Flechtwerk wie z.B. eine sog. "Japanmatte" (Fachbegriff aus der Aquaristik) befinden, dass als Grobfilter wirkt. In das Abstandsgewirk können Silberfäden oder Adsorbentien eingearbeitet sein, beispielsweise Aktivkohle, Zeolithe, Ionenaustauscher, Tonmaterialien, die zusätzlich desinfizierend bzw. antimikrobiell oder reinigend wirken. Vorteilhafterweise kann die Porosität der Filtermaterialien der mindestens zwei Filtereinheiten in Fließrichtung der Fluide zunehmen. Dadurch ergibt sich eine weitere Verbesserung der Filtrierleistung.

Die erfindungsgemäßen Filtereinheiten bzw. aus mehreren solchen Filtereinheiten zusammengesetzten erfindungsgemäßen Filtersysteme können in beliebige Filtergehäuse eingesetzt werden. Form und Abmessungen unterliegen keinen besonderen Beschränkungen. Die erfindungsgemäßen Filtereinheiten werden so passgenau in das Gehäuse eingesetzt, dass zwischen den Seitenwandungen des Gehäuses und den Filtereinheiten kein oder nur sehr wenig noch verschmutztes Fluid ungefiltert entlangsickern kann. Geeignete Filtergehäuse sind im Handel erhältlich. Die Filtergehäuse weisen einen Zulauf für z.B. schmutziges Wasser aus beispielsweise einem Teich sowie einen Ablauf für gereinigtes Wasser auf. In der Regel wird das schmutzige Wasser über eine geeignete Pumpe zugeführt. Gegebenenfalls kann das schmutzige Wasser vor dem Eintritt in das Filtergehäuse zur Abtötung von Bakterien und Algen, z.B. Fadenalgen, mit Ultraviolettlicht geeigneter Wellenlänge bestrahlt werden. Die erfindungsgemäßen Filtereinheiten oder Filtersysteme eignen sich sowohl für den Aufstrom- als auch den Abstrombetrieb. Im Aufstrombetrieb wird das schmutzige Wasser senkrecht von unten gegen die Schwerkraft durch den Filter gepumpt. Im Abstrombetrieb läuft es senkrecht von oben unter der Einwirkung der Schwerkraft durch den Filter. Selbstverständlich könnte die Fliessrichtung aber auch waagerecht sein.

Filtergehäuse für den Aufstrombetrieb weisen geeigneterweise eine Abdeckplatte aus beispielsweise Kunststoff oder Metall auf, die siebartig mit einer Vielzahl von Durchbrüchen versehen ist, die so angeordnet sind, dass sie in Fluidkommunikation mit den Knotendurchbrüchen 10 des Filternetzwerkmaterials der obersten Filtereinheit stehen. Das austretende gereinigte Fluid, z.B. Wasser, läuft dann über einen Überlauf ab oder wird abgepumpt. Die Zuführung von verschmutztem Fluid, z.B. Schmutzwasser, erfolgt durch eine Bodenplatte aus beispielsweise Kunststoff oder Metall, auf der die erfindungsgemäße Filtereinheit bzw. das erfindungsgemäße Filtersystem ruht, und die siebartig mit einer Vielzahl von Durchbrüchen versehen ist, die so angeordnet sind, dass sie in Fluidkommunikation mit den Maschen 20 des Filternetzwerkmaterials der untersten Filtereinheit stehen. Die Umrüstung vom Aufstrombetrieb in den Abstrombetrieb erfolgt einfach durch Vertauschen von Abdeck- und Bodenplatte.

Die erfindungsgemäßen Filtereinheiten und erfindungsgemäßen Filtersysteme eignen sich beispielsweise zum Abfiltrieren von Schlamm und Schwebealgen aus Wasser wie Teich- oder Aquariumswasser oder auch zur Reinigung von Gasen wie Luft oder Abgasen, z.B. in Staubsaugern oder Biofiltern zur industriellen Anwendung.

Im Folgenden wird die Erfindung anhand der beigefügten Figuren beispielhaft weiter erläutert.

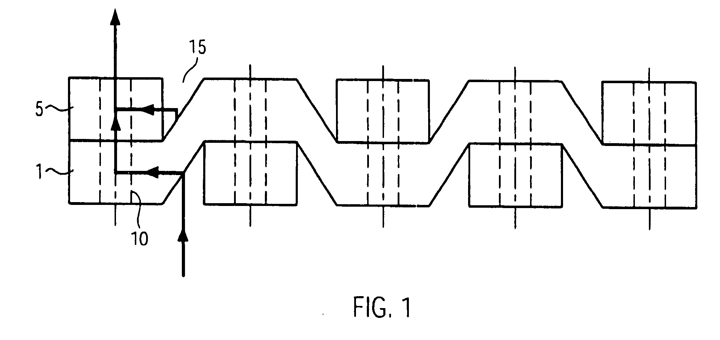

Figur 1 zeigt eine Ausführungsform einer erfindungsgemäßen Filtereinheit in der Seitenansicht, bei der die Längselemente 1 und die Querelemente 5 des Netzwerkes wellenartig geformt und so miteinander verflochten sind, dass die wellentäler der Längselemente 1 in die Wellenberge der Querelemente 5 eingreifen und umgekehrt. Bei dieser Ausführungsform haben die Wellen die Form eines gleichschenkeligen Trapezes. Durch die sich von den Längs- und Querelementen 1,5 des Netzwerkes gebildeten Knotenpunkte erstrecken sich Durchbrüche 10, die hier durch gestrichelte Linien dargestellt sind. Die Fließrichtung des zu reinigenden Fluids, z.B. Wasser, ist durch Pfeile veranschaulicht. Bei dieser Ausführungsform wird das Filterelement im Aufstrombetrieb mit dem Fluid beschickt. Das Fluid wird also von unten zugeführt und dringt zunächst in die Hohlräume 15, die hier einen keilförmigem Querschnitt haben, ein. Die Keilform ist hier durch die miteinander verflochtenen trapezförmig gewellten Längs- und Querelemente 1,5 bedingt. Je nach Form und Art der Verbindung der Längs- und Querelemente 1,5 ergeben sich natürlich auch andere Querschnittformen. Auf die Funktion hat dies jedoch keinen Einfluss.

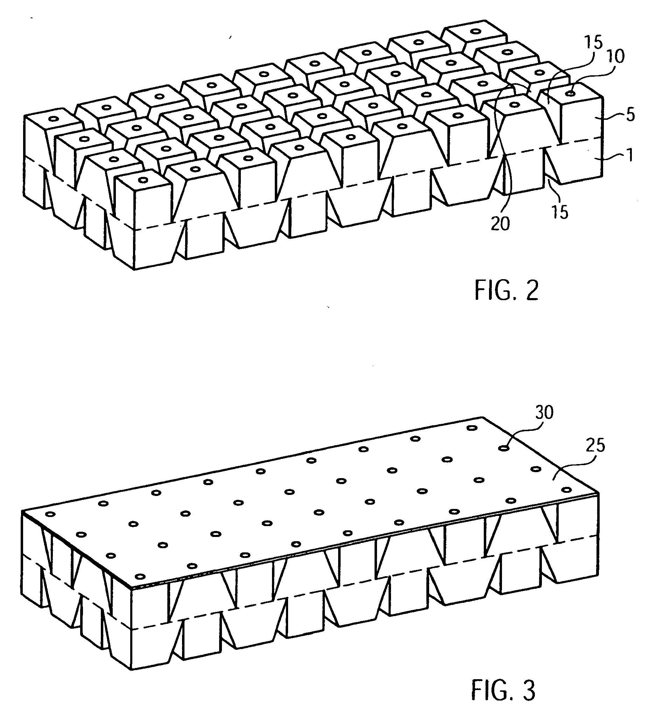

Figur 2 ist eine perspektivische Darstellung des oben beschriebenen und in Figur 1 dargestellten Filterelements. Man sieht, dass sich die keilförmigen Hohlräume bzw. Durchbrüche 15 im wesentlichen parallel zueinander durch das gesamte Filterelements erstrecken, und zwar sowohl in X- als auch und Y-Richtung, so dass sie sich kreuzen und miteinander in Fluidkommunikation stehen. An den Kreuzungspunkten bilden sich dadurch in Z-Richtung Hohlräume bzw. Durchbrüche, hier Maschen 20 genannt, die in Fluidkommunikation mit den keilförmigen Hohlräumen bzw. Durchbrüchen 15 stehen. So werden die Maschen 20 des Filternetzwerkes gebildet, durch die das zu reinigende Fluid in das Filterelement eintreten und mit dem Filtermaterial in Kontakt kommen kann.

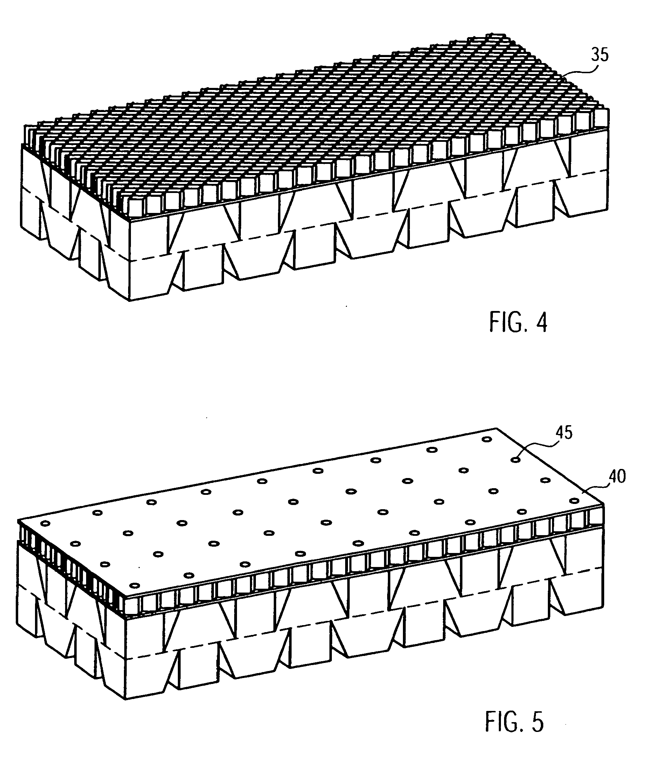

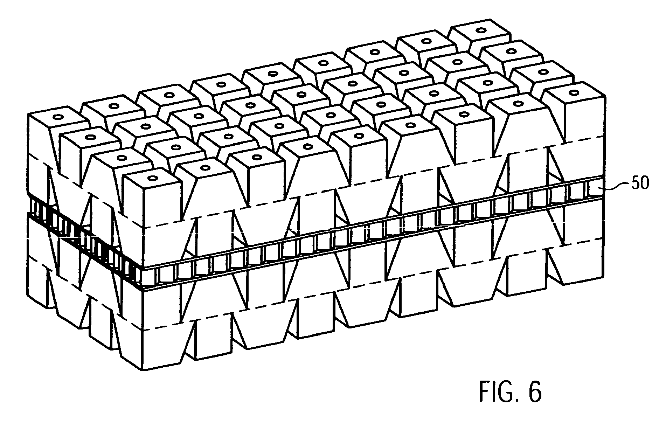

Die Figuren 3 bis 6 zeigen, wie mehrere der in Figur 2 dargestellten Filterelemente zu einem erfindungsgemäßen Filtersystem kombiniert werden.

Figur 3 zeigt ein unteres Flächenelement 25 einer Umlenkeinheit 50 (vollständig in Figur 6 dargestellt) aus einem für die Fluide undurchlässigen Material, das siebartig mit einer Vielzahl von Durchbrüchen 30 versehen ist, die so angeordnet sind, dass sie in Fluidkommunikation mit den Knotendurchbrüchen 10 des Filternetzwerkmaterials der darunterliegenden (ersten) Filtereinheit stehen.

Figur 4 zeigt einen flächigen Abstandshalter 35, der auf dem unteren Flächenelement 25 liegt.

Figur 5 zeigt ein oberes Flächenelement 40 aus einem für die Fluide undurchlässigen Material, das siebartig mit einer Vielzahl von Durchbrüchen 45 versehen ist, die so angeordnet sind, dass sie in Fluidkommunikation mit den Maschen 20 des Filternetzwerkmaterials der darüberliegenden (zweiten) Filtereinheit stehen.

Figur 6 zeigt ein Filtersystem mit zwei Filtereinheiten, zwischen denen sich eine Umlenkeinheit 50 befindet.

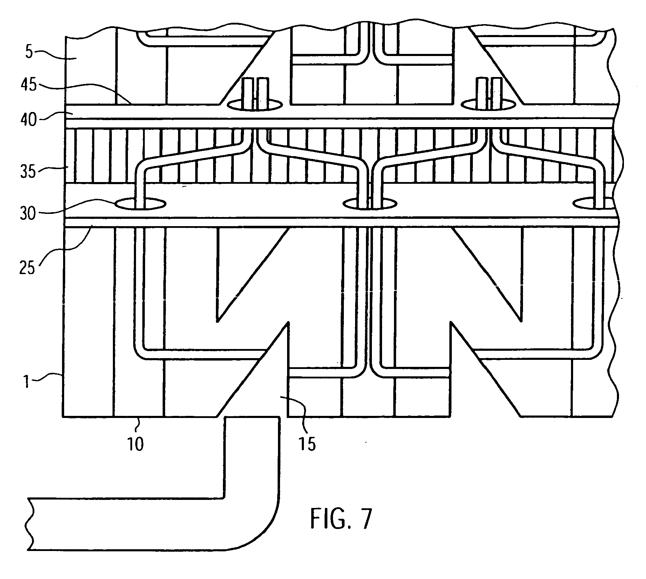

Die Figur 7 zeigt den Fluidstrom durch das in den vorstehenden Figuren dargestellte Filterelement bzw. Filtersystem im Detail.

## Patentansprüche

1. Filtereinheit zur Reinigung von Fluiden, **gekennzeichnet durch** eine Vielzahl von so miteinander verbundenen Längs- und Querelementen (1,5) aus mindestens einem für die Fluide durchlässigen Filtermaterial, dass ein Netzwerk mit einer Vielzahl von Maschen (20) ausgebildet wird, **durch** welche die Fluide in die Filtereinheit eintreten und in Kontakt mit dem das Netzwerk bildenden Filtermaterial kommen können, sowie ferner **durch** eine Vielzahl von sich **durch** die von den Längs- und Querelementen (1,5) des Netzwerks gebildeten Knotenpunkten erstreckenden Durchbrüchen (10), **durch** welche die gereinigten Fluide aus der Filtereinheit austreten können.

2. Filtereinheit nach Anspruch 1, **dadurch gekennzeichnet, dass** das Filtermaterial luftdurchlässig ist, oder, dass das Filtermaterial wasserdurchlässig ist.

3. Filtereinheit nach einem der Ansprüche 1 oder 2, **dadurch gekennzeichnet, dass** die Längs-und Querelemente (1,5) des Filtermaterials, sofern es flexibel ist, miteinander verflochten sind, oder dass die Längs- und Querelemente (1,5) des Filtermaterials, sofern es starr ist, entsprechend gestapelt sind.

4. Filtereinheit nach einem der Ansprüche 1 bis 3, **dadurch gekennzeichnet, dass** das Filtermaterial aus Gespinsten natürlicher und künstlicher Stoffe besteht wie Matten, Streifen oder Fäden aus beispielsweise Kokosfaser, Kork, Sisal, Hanf, Stroh, Gewebe wie Seide, Baumwolle, Stoff, Papier, Polymere, Kunststoffe, Schaumstoffe, Metallfäden, Eisenwolle, Grafit, Glaswolle, die optional hydrophilisiert oder hydrophobisiert sein können.

5. Filtereinheit nach einem der Ansprüche 1 bis 3, **dadurch gekennzeichnet, dass** das Filtermaterial aus starren Formstreifen aus natürlichen oder künstlichen Materialien wie poröser Keramik, Glassintermaterialien oder Sinterkunststoffen besteht, oder, dass die das Netzwerk bildenden Längs- und Querelemente (1, 5) für das Fluid durchlässige Beutel entsprechender Abmessungen sind, die das Filtermaterial in zerkleinerter Form enthalten.

6. Filtereinheit nach Anspruch 2, **dadurch gekennzeichnet, dass** das Filtermaterial ein hydrolysestabiler offenporiger Filterschaum ist, wobei der hydrolysestabile Filterschaum vorzugsweise eine Porosität im Bereich von ppi 10 bis ppi 100 hat.

7. Filtereinheit nach Anspruch 6, **dadurch gekennzeichnet, dass** der hydrolysestabile offenporige Filterschaum auf einem Polyurethan-, Polyethylen, Polypropylen-, Polyether-oder Polyesterschaum basiert.

8. Filtereinheit nach einem der Ansprüche 2, 3, 4, 6 und 7, **dadurch gekennzeichnet, dass** mindestens ein Längs- oder Querelement (1, 5) des Netzwerkes mindestens ein Hilfsmittel in einer wasserdurchlässigen Umhüllung aufweist oder darstellt, wobei das Hilfsmittel vorzugsweise unter Ionenaustauschern; Aktivkohle; Phosphatbinder, vorzugsweise Calciumperoxid, Eisen (II)- und Eisen (III) oxiden und -hydroxiden und Hydroxiden und Carbonaten der Nebengruppenelemente; Nährstoffdepots oder Kombinationen daraus ausgewählt ist.

9. Filtereinheit nach Anspruch 3, **dadurch gekennzeichnet, dass** die Längs- und Querelemente (1,5) des Netzwerkes wellenartig geformt und so miteinander verflochten sind, dass die Wellentäler der Längselemente (1) in die Wellenberge der Querelemente (5) eingreifen und umgekehrt, wobei die Wellen vorzugsweise die Form eines gleichschenkligen Trapezes haben.

10. Filtereinheit nach einem der vorstehenden Ansprüche, **dadurch gekennzeichnet, dass** das Filtermaterial außerdem chemische Katalysatoren zur Verbesserung der Reinigungsleistung aufweist.

11. Filtersystem, **dadurch gekennzeichnet, dass** mindestens zwei Filtereinheiten nach einem der vorstehenden Ansprüche so kombiniert werden, dass die sich durch die von den Längs-und Querelementen (1, 5) des Netzwerks gebildeten Knotenpunkte erstreckenden Durchbrüche (10) in Fluidkommunikation miteinander stehen, oder
Filtersystem, **dadurch gekennzeichnet, dass** mindestens zwei Filtereinheiten nach einem der Ansprüche 1 bis 10 so miteinander kombiniert werden, dass die sich durch die Knotenpunkte des Filtermaterialnetzwerks der ersten Filtereinheit erstreckenden Durchbrüche (10) in Fluidkommunikation mit den Maschen (20) des Filtermaterialnetzwerks der mindestens zweiten Filtereinheit stehen, so dass die aus den Knotendurchbrüchen (10) der ersten Filtereinheit austretenden gereinigten Fluide mit dem Filtermaterial der mindestens zweiten Filtereinheit in Kontakt kommen und durch die Knotendurchbrüche (10) von deren Filtermaterialnetzwerk weiter gereinigt aus dieser austreten können.

12. Filtersystem nach Anspruch 11, **dadurch gekennzeichnet, dass** sich zwischen jeweils zwei benachbarten Filtereinheiten sandwichartig eine Umlenkeinheit (50) befindet, die ein unteres und ein oberes Flächenelement (25, 40) aus einem für die Fluide undurchlässigen Material mit einem dadurch definierten Zwischenraum aufweist, wobei das untere und das obere Flächenelement (25, 40) siebartig mit einer Vielzahl von Durchbrüchen (30, 45) versehen sind, die so angeordnet sind, dass die Durchbrüche des unteren Flächenelements (30) in Fluidkommunikation mit den Knotendurchbrüchen (10) des Filternetzwerkmaterials der ersten Filtereinheit stehen und die Durchbrüche des oberen Flächenelements (45) in Fluidkommunikation mit den Maschen (20) des Filternetzwerkmaterials der mindestens zweiten Filtereinheit stehen, so dass die aus den Knotendurchbrüchen (10) der ersten Filtereinheit austretenden gereinigten Fluide über den Zwischenraum der Umlenkeinheit (50) in die mindestens zweite Filtereinheit eintreten und mit deren Filtermaterial in Kontakt kommen und durch die Knotendurchbrüche (10) von deren Filtermaterialnetzwerk weiter gereinigt aus dieser austreten können, wobei vorzugsweise die Porosität der Filtermaterialien der mindestens zwei Filtereinheiten in Fliessrichtung der Fluide zunimmt.

13. Filtersystem nach Anspruch 12, **dadurch gekennzeichnet, dass** sich in dem von dem unteren und dem oberen Flächenelement (25, 40) der Umlenkeinheit (50) definierten Zwischenraum ein Abstandsgewirk mit in Fliessrichtung der Fluide verlaufenden Pullfäden befindet.

14. Verwendung einer Filtereinheit nach einem der Ansprüche 1 bis 10 oder eines Filtersystems nach einem der Ansprüche 11 bis 13 zum Abfiltrieren von Schlamm und Schwebealgen aus Wasser, wobei das Wasser vorzugsweise Teich- oder Aquariumswasser ist.

15. Verwendung einer Filtereinheit nach einem der Ansprüche 1 bis 10 oder eines Filtersystems nach einem der Ansprüche 11 bis 13 zur Reinigung von Gasen wie Luft oder Abgasen.

## Claims

1. Filter unit for the cleaning of fluids, **characterised by** a plurality of longitudinal and transverse elements (1, 5) made of at least one filter material which is permeable to the fluids, which are connected to one another in such a way that a network with a plurality of meshes (20) is formed, through which the fluids enter the filter unit and can come into contact with the filter material forming the network, and also by a plurality of openings (10), which extend through the junction points formed by the longitudinal and transverse elements (1, 5) of the network and through which the cleaned fluids can leave the filter unit.

2. Filter unit according to claim 1, **characterised in that** the filter material is air-permeable, or, that the filter material is water-permeable.

3. Filter unit according to any one of claims 1 or 2, **characterised in that** the longitudinal and transverse elements (1, 5) of the filter material, if it is flexible, are interwoven, or that the longitudinal and transverse elements (1, 5) of the filter material, if it is rigid, are correspondingly stacked.

4. Filter unit according to any one of claims 1 to 3, **characterised in that** the filter material consists of webs of natural and synthetic materials, such as mats, strips or threads of, for example, coconut fibre, cork, sisal, hemp, straw, woven fabrics such as silk, cotton, cloth, paper, polymers, plastics materials, foams, metal threads, iron wool, graphite, glass wool, which may optionally be hydrophilised or hydrophobised.

5. Filter unit according to any one claims 1 to 3, **characterised in that** the filter material consists of rigid formed strips made of natural or synthetic materials such as porous ceramic, sintered glass materials, or sintered plastics materials, or, that the longitudinal and transverse elements (1, 5) forming the network are pouches of corresponding dimensions which are permeable to the fluid and which contain the filter material in comminuted form.

6. Filter unit according to claim 2 or 3, **characterised in that** the filter material is a hydrolytically stable open-pore filter foam, preferably a porosity in the range of ppi 10 to ppi 100.

7. Filter unit according to claim 6, **characterised in that** the hydrolytically stable open-pore filter foam is based on a polyurethane, polyethylene, polypropylene, polyether or polyester foam.

8. Filter unit according to any one of claims 2, 3, 4, 6 and 7, **characterised in that** at least one longitudinal or transverse element (1, 5) of the network has or is at least one auxiliary material in a water-permeable jacket, wherein the auxiliary material preferably is selected from ion exchangers; activated carbon; phosphate binders, preferably calcium peroxide, iron(II) and iron(III) oxides and hydroxides and hydroxides and carbonates of the subgroup elements; nutrient deposits or combinations thereof.

9. Filter unit according to claim 3, **characterised in that** the longitudinal and transverse elements (1, 5) of the network are undulating in shape and are interwoven in such a way that the wave valleys of the longitudinal elements (1) engage in the wave peaks of the transverse elements (5) and vice versa, wherein the waves preferably have the shape of an isosceles trapezium.

10. Filter unit according to any one of the preceding claims, **characterised in that** the filter medium also has chemical catalysts to improve the cleaning performance.

11. Filter system, **characterised in that** at least two filter units according to any one of the preceding claims are combined in such a way that the openings (10) extending through the junction points formed by the longitudinal and transverse elements (1, 5) of the network are in fluid communication with one another, or, **characterised in that** at least two filter units according to any one of claims 1 to 10 are combined with one another in such a way that the openings (10) extending through the junction points of the filter material network of the first filter unit are in fluid communication with the meshes (20) of the filter material network of the at least second filter unit in such a way that the cleaned fluids leaving the junction openings (10) of the first filter unit come into contact with the filter material of the at least second filter unit and can leave said second filter unit further cleaned by the junction openings (10) of the filter material network thereof.

12. Filter system according to claim 11, **characterised in that** a deflection unit (50) is located between two respective adjacent filter units in a sandwich-like manner and has a lower and an upper surface element (25, 40) made of a material, which is impermeable to the fluids, with an intermediate space defined thereby, the lower and the upper surface element (25, 40) being provided in the manner of a sieve with a plurality of openings (30, 45), which are arranged in such a way that the openings of the lower surface element (30) are in fluid communication with the junction openings (10) of the filter network material of the first filter unit and the openings of the upper surface element (45) are in fluid communication with the meshes (20) of the filter network material of the at least second filter unit, so the cleaned fluids leaving the junction openings (10) of the first filter unit enter the at least second filter unit via the intermediate space of the deflection unit (50) and come into contact with the filter material thereof and can leave said second filter unit further cleaned by the junction openings (10) of the filter material network thereof, where the porosity of the filter materials of the at least two filter units increases in the flow direction of the fluids.

13. Filter unit according to claim 12, **characterised in that** a spacer fabric with pull threads extending in the flow direction of the fluids is located in the intermediate space defined by the lower and the upper surface element (25, 40) of the deflection unit (50).

14. Use of a filter unit according to any one of claims 1 to 10 or of a filter system according to any one of claims 11 to 13 for filtering off sludge and floating algae from water, wherein the water is pond or aquarium water.

15. Use of a filter unit according to any one of claims 1 to 10 or of a filter system according to any one of claims 11 to 13 for cleaning gases such as air or waste gases.

## Revendications

1. Unité filtrante destinée à épurer des fluides, **caractérisée par** une multitude d'éléments longitudinaux et transversaux (1, 5) constitués d'au moins une matière filtrante perméable aux fluides reliés entre eux de telle sorte qu'un réseau est formé par une multitude de mailles (20), par lesquelles les fluides entrent dans l'unité filtrante et peuvent entrer en contact avec la matière filtrante formant le réseau de filtres, ainsi que par une multitude d'orifices (10) s'étendant à travers les noeuds de jonction formés par les éléments longitudinaux et transversaux (1, 5) du réseau, par lesquels les fluides épurés peuvent sortir de l'unité filtrante.

2. Unité filtrante selon la revendication 1, **caractérisée par le fait que** la matière filtrante est perméable à l'air, ou que la matière filtrante est perméable à l'eau.

3. Unité filtrante selon une des revendications 1 ou 2, **caractérisée par le fait que** les éléments longitudinaux et transversaux (1, 5) de la matière filtrante, dans la mesure où elle est souple, sont entrelacés les uns avec les autres, ou que les éléments longitudinaux et transversaux (1, 5) de la matière filtrante, dans la mesure où elle est rigide, sont empilés de manière correspondante.

4. Unité filtrante selon une des revendications 1 à 3, **caractérisée par le fait que** la matière filtrante est constituée de trames de matières naturelles ou artificielles, ainsi que de nattes, bandes ou fils composés par exemple de fibres de coco, liège, sisal, chanvre, paille, toile telle que la soie, coton, étoffe, papier, polymère, matières plastiques, mousses, fils métalliques, paille de fer, graphite, laine de verre, pouvant être éventuellement rendus hydrophiles ou hydrophobes.

5. Unité filtrante selon une des revendications 1 à 3, **caractérisée par le fait que** la matière filtrante est constituée de bandes moulées rigides faites de matières naturelles ou artificielles comme de la céramique poreuse, des matières en verre fritté ou des matières en plastique fritté, ou que les éléments longitudinaux et transversaux (1, 5) formant le réseau pour le fluide sont des poches perméables au fluide de dimensions correspondantes, qui contiennent la matière filtrante sous une forme broyée.

6. Unité filtrante selon la revendication 2, **caractérisée par le fait que** la matière filtrante est une mousse filtrante à pores ouverts résistante à l'hydrolyse, la mousse filtrante résistante à l'hydrolyse ayant préférentiellement une porosité de l'ordre de 10 ppi 10 à 100 ppi.

7. Unité filtrante selon la revendication 6, **caractérisée par le fait que** la mousse filtrante à pores ouverts résistante à l'hydrolyse est à base de mousse polyuréthane, polyéthylène, polypropylène, polyéther ou polyester.

8. Unité filtrante selon une des revendications 2, 3, 4, 6, et 7, **caractérisée par le fait qu'**au moins un élément longitudinal et transversal (1, 5) du réseau présente ou représente au moins un élément auxiliaire dans une enveloppe perméable à l'eau, l'élément auxiliaire étant préférentiellement choisi parmi les échangeurs d'ions ; les charbons actifs ; les fixateurs de phosphates, préférentiellement du peroxyde de calcium, des oxydes et hydroxydes de fer (II) et (III) et des hydroxydes et carbonates des éléments des sous-groupes ; les dépôts d'éléments nutritifs ou les combinaisons de ces derniers.

9. Unité filtrante selon la revendication 3, **caractérisée par le fait que** les éléments longitudinaux et transversaux (1, 5) du réseau ont une forme ondulée et sont entrelacés les uns avec les autres de telle sorte que les fonds des ondulations des éléments longitudinaux (1) pénètrent dans les sommets des ondulations des éléments transversaux (5) et vice versa, les ondes ayant préférentiellement la forme d'un trapèze isocèle.

10. Unité filtrante selon une des revendications précédentes, **caractérisée par le fait que** la matière filtrante présente en outre des catalyseurs chimiques destinés à l'amélioration de la capacité de purification.

11. Système filtrant, **caractérisé par le fait que** au moins deux unités filtrantes sont combinées selon une des revendications précédentes de telle sorte que les orifices (10) s'étendant à travers les noeuds de jonction formés par les éléments longitudinaux et transversaux (1, 5) du réseau se trouvent mutuellement en communication fluidique, ou
système filtrant, **caractérisé par le fait qu'**au moins deux unités filtrantes selon une des revendications 1 à 10 peuvent être combinées de telle sorte que les orifices (10) s'étendant à travers les noeuds de jonction du réseau de matière filtrante de la première unité filtrante se trouvent en communication fluidique avec les mailles (20) du réseau de matière filtrante d'au moins la seconde unité filtrante, de telle sorte que les fluides épurés sortant des orifices entre les noeuds (10) au moins de la seconde unité filtrante entrent en contact avec la matière filtrante et peuvent sortir, la purification étant poursuivie, à travers les orifices entre les noeuds (10) de son réseau de matière filtrante.

12. Système filtrant selon la revendication 11, **caractérisé par le fait qu'**une unité de déviation (50) se trouve prise en sandwich entre chacune des unités filtrantes adjacentes, qui présente un élément plat inférieur et supérieur (25, 40) constitué d'une matière imperméable aux fluides avec un orifice traversant y étant défini, l'élément plat inférieur et l'élément plat supérieur (25, 40) devant être considérés comme ayant une forme de tamis dotés d'une multitude d'orifices (30, 45), disposés de telle sorte que les orifices de l'élément plat inférieur (30) se trouvent en communication fluidique avec les orifices entre les noeuds (10) de la matière du réseau de filtres de la première unité filtrante et les orifices de l'élément plat supérieur (45) se trouvent en communication fluidique avec les mailles (20) de la matière du réseau de filtres au moins de la seconde unité filtrante, de telle sorte que les fluides épurés sortant des orifices entre les noeuds (10) de la première unité filtrante entrent par l'intermédiaire de l'interstice de l'unité de déviation (50) dans au moins la seconde unité filtrante et entrent en contact avec sa matière filtrante et peuvent en sortir à travers les orifices entre les noeuds (10), la purification étant poursuivie par son réseau de matière filtrante, préférentiellement la porosité des matières filtrantes d'au moins deux unités filtrantes augmente dans la direction d'écoulement des fluides.

13. Système filtrant selon la revendication 12, **caractérisé par le fait que** un maillage d'écartement se trouve dans l'interstice défini par l'élément plat (25, 40) inférieur et supérieur de l'unité de déviation (50) avec des fils à tirer se dirigeant dans la direction d'écoulement des fluides.

14. Utilisation d'une unité filtrante selon une des revendications 1 à 10 ou d'un système filtrant selon une des revendications 11 à 13 destiné(s) à filtrer les boues et les algues flottantes de l'eau, l'eau étant préférentiellement l'eau d'un étang ou d'un aquarium.

15. Utilisation d'une unité filtrante selon une des revendications 1 à 10 ou d'un système filtrant selon une des revendications 11 à 13 destinée au nettoyage de gaz comme l'air ou les gaz d'échappement.
